# FASCICULE DE BREVET EUROPEEN

(11) **EP 3 468 052 B1**
(45) Date de publication et mention de la délivrance du brevet: **20.10.2021**
(21) Numéro de dépôt: 18197468.4
(22) Date de dépôt: 28.09.2018
(51) Int. Cl.: H04B 1/7075, H04B 1/7077, H04B 1/7087, H04L 7/00

(54) **PROCÉDÉ DE SYNCHRONISATION TEMPORELLE INSENSIBLE AUX VARIATIONS DE PUISSANCE, RÉCEPTEUR ET PROGRAMME D'ORDINATEUR ASSOCIÉS**
ZEITLICHES SYNCHRONISIERUNGSVERFAHREN, DAS GEGENÜBER LEISTUNGSSCHWANKUNGEN UNEMPFINDLICH IST, ENTSPRECHENDER EMPFÄNGER UND ENTSPRECHENDES COMPUTERPROGRAMM
TIME SYNCHRONISATION METHOD INSENSITIVE TO POWER VARIATIONS, ASSOCIATED RECEIVER AND COMPUTER PROGRAM

(30) Priorité: 05.10.2017 FR 1759347
(43) Date de publication de la demande: 10.04.2019
(73) Titulaire: Commissariat à l'énergie atomique et aux énergies alternatives, 75015 Paris (FR)
(72) Inventeur: LAUGEOIS, Marc, 38000 GRENOBLE (FR)
(74) Mandataire: Brevalex

(56) Documents cités:
- EP-A1- 0 700 611
- US-A- 5 598 429
- US-B2- 9 350 413
- YAN D ET AL: "ACQUISITION USING DIFFERENTIALLY ENCODED BARKER SEQUENCE IN DS/SS PACKET RADIO", COMMUNICATIONS - GATEWAY TO GLOBALIZATION. PROCEEDINGS OF THE INTERNATIONAL CONFERENCE ON COMMUNICATIONS. SEATTLE, JUNE 18 - 22, 1995; [PROCEEDINGS OF THE INTERNATIONAL CONFERENCE ON COMMUNICATIONS (ICC)], NEW YORK, IEEE, US, vol. 3, 18 juin 1995 (1995-06-18), pages 1647-1651, XP000535036, ISBN: 978-0-7803-2487-9

## Description

### DOMAINE TECHNIQUE

Le domaine de l'invention est celui des systèmes de communication de données, et plus particulièrement celui de la synchronisation temporelle de paquets de données réalisée par un récepteur d'un système de communication. L'invention trouve avantageusement application dans le décodage de signaux portant des trames de données où chaque trame comprend un symbole d'apprentissage formé de la répétition d'une séquence d'apprentissage, comme par exemple des signaux OFDM (« Orthogonal Frequency Division Multiplex» désignant un multiplexage de fréquences orthogonales), notamment des signaux OFDM à préfixe cyclique CP (« Cylclic Prefix ») ou à égalisation dans le domaine fréquentiel FDE (« Frequency Domain Equalization »).

### ÉTAT DE LA TECHNIQUE ANTÉRIEURE

Sur une chaîne de réception d'un récepteur d'un système de communication sans fil, les données issues d'une antenne entrent dans une unité de contrôle de gain qui a pour rôle de régler le gain d'un amplificateur RF afin qu'un convertisseur analogique-numérique agencé en aval de l'amplificateur travaille dans sa zone linéaire.

Une fois ce gain réglé, il convient d'effectuer une synchronisation temporelle du flux de données entrantes qui consiste à déterminer les instants de début de trame dans le signal reçu. Les données sur lesquelles un algorithme de synchronisation opère ne doivent pas varier en puissance. Les unités de contrôle de gain et de synchronisation temporelle d'une chaîne de décodage sont donc étroitement liées.

Or le gain réglé par l'unité de contrôle de gain n'est pas nécessairement précis et dépend de plusieurs facteurs tels que la précision de l'estimation de la puissance « numérique » en sortie des convertisseurs. Ainsi l'algorithme de synchronisation doit être en mesure de s'accommoder des différences de puissance de trames en trames.

Un algorithme de synchronisation classique est connu de l'article « Robust Frequency and Timing Synchronization for OFDM », de Timothy M. Schmidl et Donald C. Cox, IEEE TRANSACTIONS ON COMMUNICATIONS, VOL. 45, NO. 12, DECEMBER 1997. Cet algorithme est basé sur deux répétitions temporelles au sein du symbole OFDM. Une autocorrélation permet, à partir de la détection de son maximum, de déterminer la position de l'instant de synchronisation au moyen du calcul de l'erreur quadratique moyenne autour du point idéal de synchronisation. Un autre algorithme de synchronisation est connu de l'article "Acquisition using differentially encoded Barker sequence in DS/SS packet radio", de D. Yan et P. Ho, PROCEEDINGS OF THE INTERNATIONAL CONFERENCE ON COMMUNICATIONS, SEATTLE, JUNE 18 - 22, 1995, VOL. 3, PAGES 1647 - 1651, ISBN: 978-0-7803-2487-9. Cet article décrit un procédé de synchronisation ayant les caractéristiques définies dans le péambule de la revendication indépendante 1.

### EXPOSÉ DE L'INVENTION

L'invention a pour objectif de proposer un procédé de synchronisation dont la sensibilité aux imprécisions de réglage de gain est réduite et dont les performances de détection de l'instant idéal de synchronisation sont de ce fait améliorées.

A cet effet, l'invention propose un procédé de synchronisation d'un signal entrant dans un récepteur d'un système de communication, le signal entrant portant des trames de données et chaque trame comprenant un symbole d'apprentissage formé de N répétitions d'une séquence d'apprentissage.

Le procédé comprend la détermination d'un signal de corrélation totale en venant corréler le signal entrant avec un symbole de corrélation formé de N répétitions d'une séquence de corrélation correspondant à tout ou partie de la séquence d'apprentissage, et la détermination d'un signal de corrélation partielle en venant corréler le signal entrant avec la séquence de corrélation.

Le procédé se poursuit avec l'identification d'un pic du signal de corrélation totale à un instant t_{pct}, dit date du pic de corrélation totale, et la définition d'au moins un seuil à partir de la puissance du pic du signal de corrélation totale. Le procédé comprend la comparaison de la puissance du signal de corrélation partielle à l'au moins un seuil et, en en fonction du résultat de ladite comparaison, la synchronisation peut être validée en indiquant le temps de démarrage du premier symbole suivant le symbole d'apprentissage dans la trame à partir de la date du pic de corrélation totale.

Certains aspects préférés mais non limitatifs de ce procédé sont les suivants :
- la comparaison de la puissance du signal de corrélation partielle à l'au moins un seuil comprend la comparaison de la puissance du signal de corrélation partielle aux instants tpct-k*tsc précédant la date de pic de corrélation totale à l'au moins un seuil, les instants tpct-k*tsc étant dits dates de pic de corrélation partielle et tsc étant la durée correspondant à la séquence de corrélation et k un entier compris entre 0 et N-1;
- il comprend la définition d'un seuil haut et d'un seuil bas et la synchronisation est validée lorsque la puissance du signal de corrélation partielle à chacune des dates de pic de corrélation partielle est comprise entre le seuil haut et le seuil bas ;
- le seuil bas est une fraction de la puissance du pic du signal de corrélation totale et le seuil haut est un multiple de la puissance du pic du signal de corrélation totale ;
- le seuil bas et le seuil haut sont symétriques par rapport à la puissance du pic du signal de corrélation totale ;
- il comprend en outre une étape d'invalidation de la synchronisation lorsque le signal de corrélation partielle présente, entre les instants t_{pct}-N*t_{sc} et t_{pct} et en dehors de fenêtres temporelles comprenant chacune l'une des dates de pic de corrélation partielle, une puissance supérieure à la puissance du signal de corrélation partielle à l'une des dates de pic de corrélation partielle ;
- il comprend en outre une étape d'invalidation de la synchronisation lorsque la puissance du signal de corrélation partielle à l'une des dates de pic de corrélation partielle est inférieure à la puissance du signal de corrélation totale à la date de pic de corrélation totale ;
- il comprend une étape préalable de réglage de gain d'un amplificateur du récepteur consistant à établir une consigne de gain stationnaire.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 est un schéma illustrant une trame de données du signal entrant, et plus particulièrement son préambule, ainsi que les signaux de corrélation totale et de corrélation partielle utilisés dans le cadre de l'invention ;
- la figure 2 est un schéma d'une unité de synchronisation temporelle configurée pour une mise en œuvre possible du procédé selon l'invention ;
- les figures 3 et 4 illustrent des profils temporels de signaux de corrélation totale et de corrélation partielle respectivement en l'absence et en présence de bruit ;
- la figure 5 est un graphique représentant l'évolution de la probabilité de détection de l'instant idéal de synchronisation en fonction du rapport signal à bruit du signal entrant ;
- les figures 6 et 7 représentent des profils temporels de signaux de corrélation totale et de corrélation partielle conduisant à un échec de synchronisation ;
- la figure 8 représente des profils temporels de signaux de corrélation totale et de corrélation partielle conduisant à la validation erronée d'une synchronisation, cette validation erronée pouvant être contrecarrée dans une variante de réalisation de l'invention.

### EXPOSÉ DÉTAILLÉ DE MODES DE RÉALISATION PARTICULIERS

L'invention porte sur un procédé de synchronisation d'un signal entrant dans un récepteur d'un système de communication. Ce procédé est mis en œuvre dans une unité de synchronisation temporelle équipant le récepteur, ce dernier comprenant également une unité de contrôle de gain.

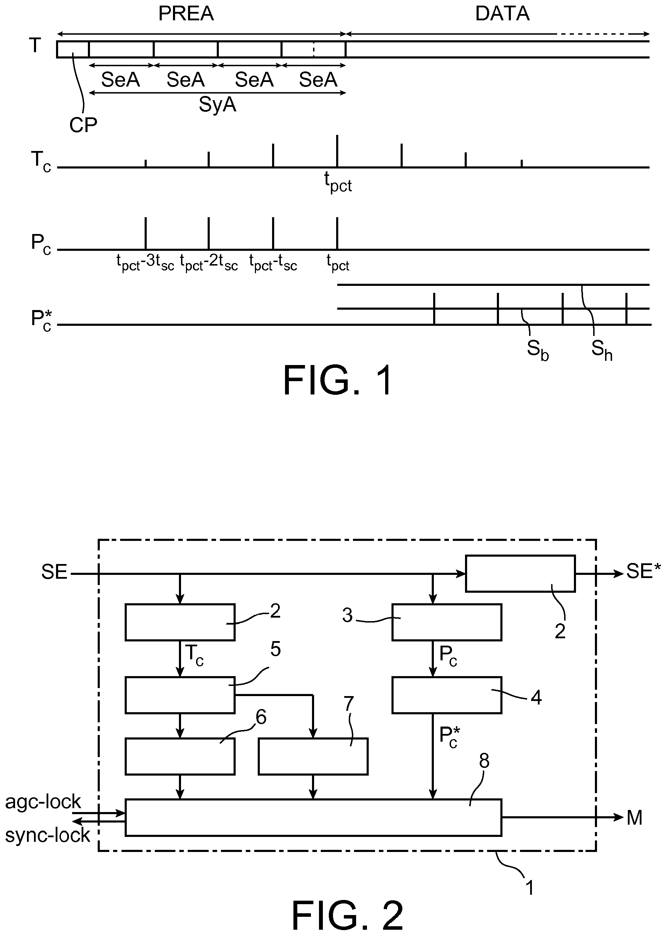

Le signal entrant porte des trames de données. Comme représenté sur la figure 1, chaque trame T comprend un préambule PREA suivie d'une portion DATA portant une succession de symboles de données. Le préambule PREA comprend au moins un symbole d'apprentissage SyA dédié à la recherche de synchronisation qui est formé de N répétitions d'une séquence d'apprentissage SeA (N étant un entier supérieur ou égal à 2; N=4 dans l'exemple de la figure 1). La séquence d'apprentissage SeA comprend Ns échantillons, par exemple 16 échantillons. Le symbole d'apprentissage SA, de même que les symboles de données, peut être précédé par un préfixe cyclique CP.

La synchronisation selon l'invention est mise en œuvre une fois achevée la phase de réglage de gain. Le procédé comprend ainsi une étape préalable de réglage de gain d'un amplificateur du récepteur consistant à établir une consigne de gain stationnaire. Une fois la consigne de gain stationnaire établie, une fenêtre temporelle est ouverte. Durant cette fenêtre, l'algorithme de synchronisation est activé. A l'expiration de cette fenêtre, si la synchronisation est validée, le gain est maintenu durant la trame. Dans le cas contraire, l'unité de contrôle de gain reprend la main pour réaliser une nouvelle phase de réglage de gain.

Le procédé selon l'invention comprend l'extraction d'une séquence de corrélation à partir de la séquence d'apprentissage. La séquence de corrélation correspond ainsi à tout ou partie de la séquence d'apprentissage et compte Ls échantillons (Ls≤Ns). Dans ce qui suit, par souci de simplicité dans l'exposé, on considérera l'exemple Ls=Ns.

Le procédé comprend la détermination d'un signal de corrélation totale Tc et d'un signal de corrélation partielle Pc. Le signal de corrélation totale Tc est déterminé en venant corréler le signal entrant avec un symbole de corrélation formé de N répétitions de la séquence de corrélation. Le symbole de corrélation correspond au symbole d'apprentissage SyA dans l'exemple considéré où la séquence de corrélation correspond précisément à la séquence d'apprentissage. Le signal de corrélation partielle Pc est déterminé venant corréler le signal entrant avec la séquence de corrélation (qui correspond précisément à la séquence d'apprentissage SeA dans l'exemple considéré).

Le procédé est suivi d'une étape identification d'un pic (un maximum) du signal de corrélation totale Tc à un instant t_{pct}, dit date du pic de corrélation totale. Un pic est considéré comme bon si le signal de corrélation totale ne présente pas de nouveau maximum dans une fenêtre de un symbole à partir du dernier maximum.

Puis au moins au moins un seuil est défini à partir de la puissance du pic du signal de corrélation totale. Le procédé comprend typiquement la définition, relativement à la puissance du pic du signal de corrélation totale, à la fois d'un seuil bas Sb et d'un seuil haut Sh. Le seuil bas est une fraction de la puissance du pic du signal de corrélation totale et le seuil haut est un multiple de la puissance du pic du signal de corrélation totale. Le seuil bas et le seuil haut peuvent être symétriques par rapport à la puissance du pic du signal de corrélation totale. On peut par exemple les fixer respectivement à -X dB et +X dB de la puissance du pic du signal de corrélation totale, avec X une valeur strictement positive. Ces seuils viennent conditionner les probabilités de détection et de fausse alarme de la synchronisation.

Le procédé comprend ensuite une étape de comparaison à l'au moins un seuil de la puissance du signal de corrélation partielle Pc aux instants t_{pct}-k*t_{sc} précédant la date de pic de corrélation totale. Les instants t_{pct}-k*t_{sc} sont dits dates de pic de corrélation partielle, t_{sc} est la durée correspondant à la séquence de corrélation et k est un entier compris entre 0 et N-1. La position du pic du signal de corrélation totale permet effectivement de déterminer les positions relatives des pics du signal de corrélation partielle, et le procédé propose d'analyser ces positions pour vérifier qu'elles correspondent bien à des pics.

Dans une réalisation pratique de l'invention nécessitant un séquencement des étapes (à savoir identification du pic et calcul du seuil, validation de ce pic - soit un symbole - , et enfin utilisation du pic), on vient retarder le signal de corrélation partielle Pc d'une durée correspond à la durée du préambule PREA et former un signal de corrélation partielle retardé Pc*. Ainsi, la position du pic du signal de corrélation totale (à t_{pct}) permet de prédéterminer les positions relatives des pics du signal de corrélation partielle retardé (à t_{pct}+t_{cp}+m*t_{sc}, où t_{cp} correspond à la durée du préfixe cyclique et m est un entier compris entre 1 et N). Ainsi une fois le pic du signal de corrélation totale validé, une fenêtre temporelle d'une durée d'un symbole (N*Ns échantillons) peut être ouverte pour procéder à l'examen du signal de corrélation partielle Pc* et vérifier si des pics sont bien observés aux positions prédéterminées.

L'examen du signal de corrélation partielle Pc ou du signal de corrélation partielle retardée Pc* aux dates précitées sont parfaitement équivalents, la puissance du signal de corrélation partielle Pc aux instants t_{pct}-k*t_{sc} précédant la date de pic de corrélation totale étant identique à la puissance du signal de corrélation partielle retardé Pc* aux instants à t_{pct}+t_{cp}+m*t_{sc} suivant la date de pic de corrélation totale.

En fonction du résultat de l'étape de comparaison, la synchronisation peut être validée et le temps de démarrage du premier symbole suivant le symbole d'apprentissage dans la trame peut être déterminé à partir de la date du pic de corrélation totale. La synchronisation est plus précisément validée lorsque la puissance du signal de corrélation partielle à chacune des dates de pic de corrélation partielle est comprise entre le seuil haut et le seuil bas (i.e. on observe N pics considérés comme étant valides).

Dans le cadre de l'invention, l'au moins un seuil est déterminé de manière relative à la puissance du pic de corrélation totale. De ce fait, la synchronisation est rendue insensible aux imprécisions de réglage de gain. Par ailleurs, la recherche de N pics valides rend la synchronisation très robuste en présence unique de bruit. En effet, cette pluralité de pics valides crée une redondance alors qu'il est peu probable que N « faux » pics présentent une puissance dans la fourchette des seuils bas et haut.

On a représenté sur la figure 2 un schéma d'une unité de synchronisation temporelle 1 configurée pour une mise en œuvre possible du procédé précédemment décrit. L'unité 1 reçoit un flux de donnes d'entrée (signal entrant SE) et fournit en sortie un signal de sortie SE* correspond au signal entrant SE retardé au moyen d'un premier temporisateur 2 d'un délai correspondant à la durée nécessaire aux calculs de synchronisation (cette durée intégrant notamment l'analyse du signal de corrélation partielle retardé aux des dates de pic prédéterminées).

L'unité 1 comprend par ailleurs un premier corrélateur 2 configuré pour déterminer le signal de corrélation total Tc, un deuxième corrélateur 3 configuré pour déterminer le signal de corrélation partielle Pc et un deuxième temporisateur 4 configuré pour fournir le signal de corrélation partielle retardé Pc*.

L'unité 1 comprend également un module d'analyse 5 du signal de corrélation total Tc configuré pour identifier un maximum du signal de corrélation totale. Ce module 5 met à jour le maximum du signal de corrélation totale à chaque échantillon entrant. Un module de calcul de seuil 6 est configuré pour calculer l'au moins un seuil Sb, Sh à partir du maximum du signal de corrélation totale mis à jour à chaque échantillon entrant. Lorsqu'un nouveau maximum est identifié, un compteur 8 est lancé d'une durée correspondant à la durée d'un symbole. Lorsque ce compteur 8 est lancé, un module 9 d'analyse de pics vient procéder à la comparaison de la puissance du signal de corrélation partielle retardé Pc* (aux dates de pic prédéterminées par l'indentification du nouveau maximum, i.e. la date de lancement du compteur 8) avec l'au moins un seuil, et le cas échéant à la validation de la synchronisation. Lorsque la synchronisation est validée, le temps de démarrage du premier symbole suivant le symbole d'apprentissage dans la trame est déterminé et le module 9 fournit en sortie un marqueur M de début du paquet de donnée DATA.

Le module 9 d'analyse de pics n'est activé que pendant une fenêtre temporelle lancée suite à l'établissement d'une consigne de gain stationnaire par l'unité de contrôle de gain. Une information d'établissement de la consigne stationnaire agc-lock est pour cela fournie au module 9 par l'unité de contrôle de gain. Si la synchronisation est validée par le module 9 lors de sa fenêtre temporelle d'activité, le gain est maintenu durant la trame. Dans le cas contraire, l'unité de contrôle de gain reprend la main pour réaliser une nouvelle phase de réglage de gain. Une information de validation de la synchronisation sync-lock est pour cela fournie à l'unité de contrôle de gain par le module 9.

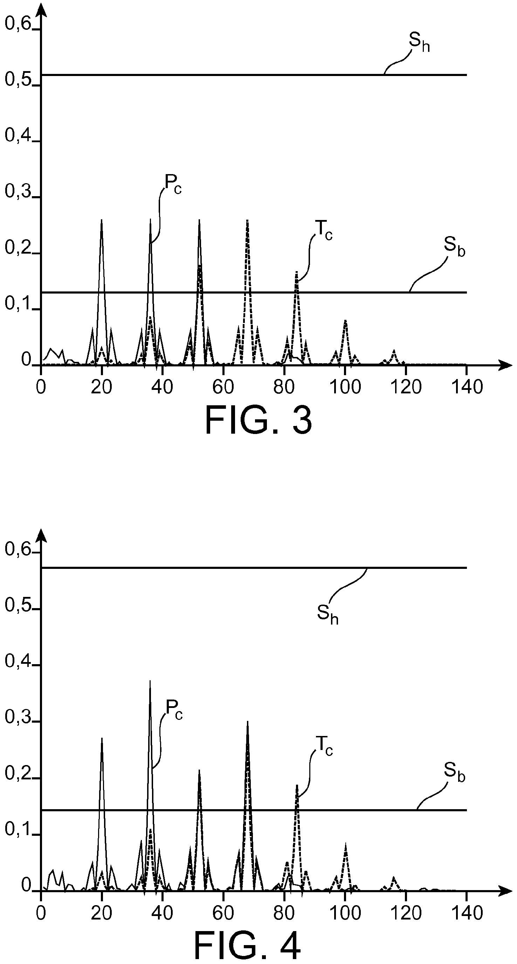

On a représenté sur les figures 3 et 4 des profils temporels de signaux de corrélation totale Tc (en traits pointillés) et de corrélation partielle Pc (en traits pleins) respectivement en l'absence et en présence de bruit. Sur ces figures, l'axe des abscisses représente le temps, exprimé en termes d'échantillons. La figure 3 présente un profil de corrélation sans que le signal ne soit entaché de bruit, le dernier pic de corrélation partielle est à la même position que le pic de corrélation totale, et dans ce cas de même amplitude (du fait de l'absence de bruit). Le rapport signal à bruit est de 10 dB dans l'exemple de la figure 4. Sur chacune de ces figures, on observe 4 pics de corrélation partielle « valides » en ce sens que la puissance du signal de corrélation partielle, aux dates de pics de corrélation partielle déterminées à partir de la date de pic de corrélation totale, est bien comprise dans la fourchette définie par les seuils bas et haut. La synchronisation est donc bien réalisée.

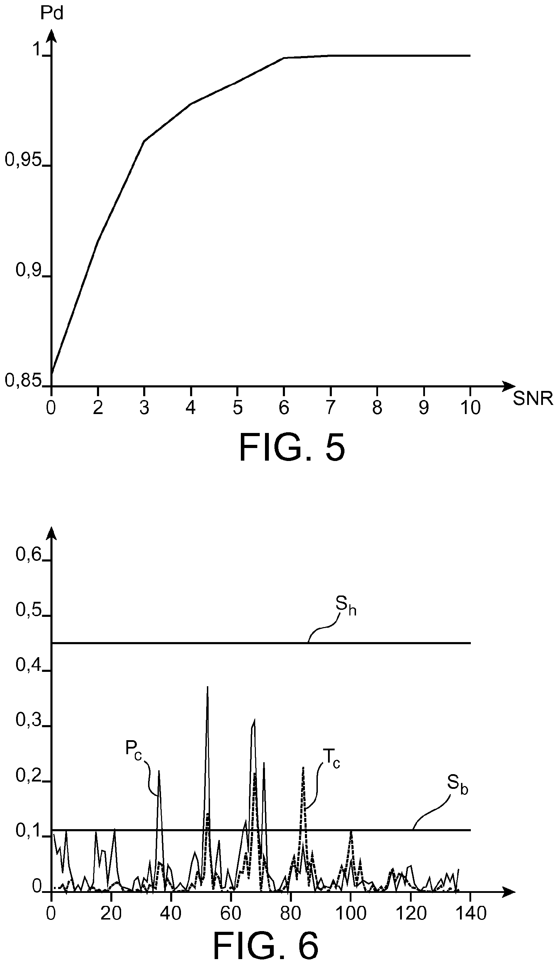

On a représenté sur la figure 5 de la probabilité de détection de l'instant idéal de synchronisation en fonction du rapport signal à bruit du signal entrant. La séquence de corrélation est identique à la séquence d'apprentissage et compte 16 échantillons. Les seuils haut et bas sont positionnés à +/- 3 dB de la puissance du pic de corrélation totale. On observe que pour un rapport signal à bruit supérieur à 7 dB, la détection est de 100%. Cette valeur étant en adéquation avec la courbe d'erreur binaire d'une modulation QPSK, le décodage des données décroche donc avant que la synchronisation temporelle ne se détériore.

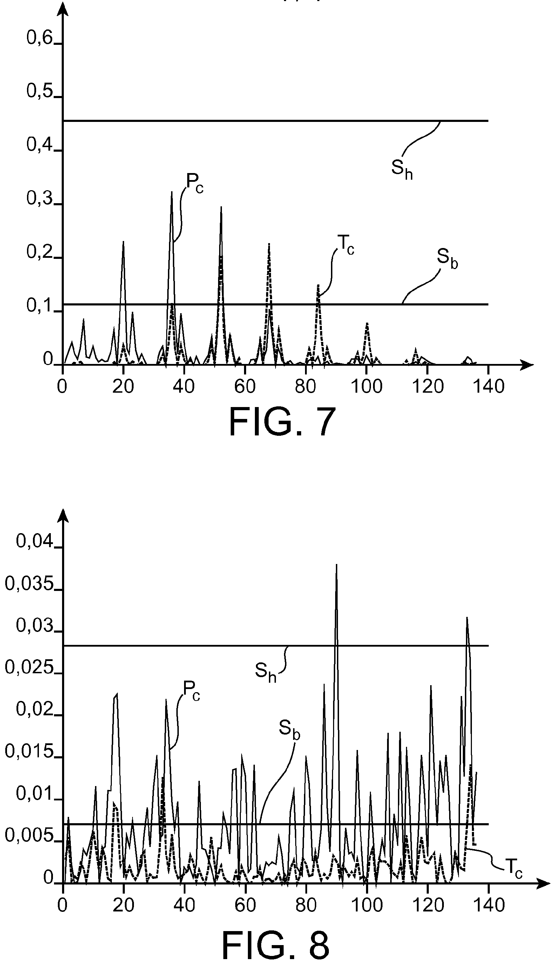

On a représenté sur les figures 6 et 7 des profils temporels de signaux de corrélation totale et de corrélation partielle conduisant à un échec de synchronisation.

Sur la figure 6, on observe un maximum secondaire de la corrélation totale (en position 84) dont la puissance est supérieure à celle du maximum principal de la corrélation totale (en position 64). L'algorithme de synchronisation s'accroche sur un « faux » pic de corrélation totale, on ne retrouve pas N pics valides de corrélation partielle à partir de ce « faux » pic et la synchronisation échoue.

Sur la figure 7, le maximum principal de la corrélation totale est bien identifié en position 64, mais la puissance du signal de corrélation partielle à cette date est inférieure au seuil bas de sorte que la synchronisation échoue.

En absence de signal, et en reprenant les mêmes valeurs de seuil à +/- 3 dB, on observe une probabilité de fausse alarme de 10 %. La figure 8 illustre à cet égard un cas de fausse alarme. Sur cette figure, le pic de plus forte puissance du signal de corrélation totale se trouve en position 134 menant à un examen de la puissance du signal de corrélation partielle aux positions 134, 118, 102 et 84. Le seuil bas est fixé à 0.0071 et le seuil haut à 0.0284 (+/- 3dB). La puissance du signal de corrélation partielle aux positions précitées est comprise entre les seuils bas et haut, de sorte que la synchronisation est validée. Or ces positions ne correspondent pas aux pics du signal de corrélation partielle et la validation de la synchronisation est donc erronée.

Pour contrecarrer une telle validation erronée, dans une variante de réalisation de l'invention le procédé comprend en outre une étape d'invalidation de la synchronisation lorsque le signal de corrélation partielle présente, entre les instants t_{pct}-N*t_{sc} et t_{pct} et en dehors de fenêtres temporelles comprenant chacune l'une des dates de pic de corrélation partielle, une puissance supérieure à la puissance du signal de corrélation partielle à l'une des dates de pic de corrélation partielle.

Reprenant l'exemple de la figure 8, on considère des fenêtres temporelles autour de dates des pics de corrélation partielle, par exemple de trois échantillons soit les fenêtres correspondant aux positions [133-135], [117-119], [101-103] et [85-87]. On vérifie si dans une fenêtre de durée 1 symbole (soit les positions dans la gamme [62-134] en considérant un symbole formé d'un préfixe cyclique de 8 échantillons et 4 répétitions d'une séquence d'apprentissage de 16 échantillons), et en dehors des fenêtres autour de dates des pics de corrélation partielle, il existe des valeurs de corrélation partielle supérieures à celles conduisant à la détection. Cela est le cas dans l'exemple de la figure 8, et la synchronisation est alors invalidée.

Dans une autre variante de réalisation visant à réduire le taux de fausse alarme, mise en œuvre indépendamment ou non de la variante discutée précédemment, le procédé comprend une étape d'invalidation de la synchronisation lorsque la puissance du signal de corrélation partielle à l'une des dates de pic de corrélation partielle est inférieure à la puissance du signal de corrélation totale à la date de pic de corrélation totale. En mettant en œuvre conjointement ces deux variantes, le taux de fausse alarme est réduit à 0.

L'invention n'est pas limitée au procédé précédemment décrit mais s'étend également à un récepteur d'un signal de communication comprenant des moyens configurés pour mettre en œuvre le procédé, ce récepteur pouvant par exemple être doté de l'unité de synchronisation temporelle de la figure 2. Et l'invention s'étend également à un produit programme d'ordinateur comprenant des instructions de code pour l'exécution des étapes du procédé de synchronisation lorsque ledit programme est exécuté sur un ordinateur.

## Revendications

1. Procédé de synchronisation d'un signal entrant (SE) dans un récepteur d'un système de communication, le signal entrant portant des trames de données et chaque trame (T) comprenant un symbole d'apprentissage (SyA) formé de N répétitions d'une séquence d'apprentissage (SeA), le procédé comprenant l'étape de :
- détermination d'un signal de corrélation totale (Tc) en venant corréler le signal entrant avec un symbole de corrélation formé de N répétitions d'une séquence de corrélation correspondant à tout ou partie de la séquence d'apprentissage ;
et étant caractérisé en qu'il comprend en outre les étapes de :
- détermination d'un signal de corrélation partielle (Pc) en venant corréler le signal entrant avec la séquence de corrélation ;
- identification d'un pic du signal de corrélation totale à un instant t_{pct}, dit date du pic de corrélation totale ;
- définition d'au moins un seuil (Sb, Sh) à partir de la puissance du pic du signal de corrélation totale ;
- comparaison de la puissance du signal de corrélation partielle à l'au moins un seuil ;
- en fonction du résultat de ladite comparaison, validation de la synchronisation et détermination du temps de démarrage du premier symbole suivant le symbole d'apprentissage dans la trame à partir de la date du pic de corrélation totale.

2. Procédé selon la revendication 1, dans lequel la comparaison de la puissance du signal de corrélation partielle à l'au moins un seuil comprend la comparaison de la puissance du signal de corrélation partielle aux instants t_{pct}-k*t_{sc} précédant la date de pic de corrélation totale à l'au moins un seuil, les instants t_{pct}-k*t_{sc} étant dits dates de pic de corrélation partielle et t_{sc} étant la durée correspondant à la séquence de corrélation et k un entier compris entre 0 et N-1 ;

3. Procédé selon la revendication 2, comprenant la définition d'un seuil haut (Sh) et d'un seuil bas (Sb) et dans lequel la synchronisation est validée lorsque la puissance du signal de corrélation partielle à chacune des dates de pic de corrélation partielle est comprise entre le seuil haut et le seuil bas.

4. Procédé selon l'une des revendications 1 à 3, dans lequel le seuil bas est une fraction de la puissance du pic du signal de corrélation totale et le seuil haut est un multiple de la puissance du pic du signal de corrélation totale.

5. Procédé selon la revendication 4, dans lequel le seuil bas et le seuil haut sont symétriques par rapport à la puissance du pic du signal de corrélation totale.

6. Procédé selon l'une des revendications 1 à 5, comprenant en outre une étape d'invalidation de la synchronisation lorsque le signal de corrélation partielle présente, entre les instants t_{pct}-N*t_{sc} et t_{pct} et en dehors de fenêtres temporelles comprenant chacune l'une des dates de pic de corrélation partielle, une puissance supérieure à la puissance du signal de corrélation partielle à l'une des dates de pic de corrélation partielle.

7. Procédé selon l'une des revendications 1 à 6, comprenant en outre une étape d'invalidation de la synchronisation lorsque la puissance du signal de corrélation partielle à l'une des dates de pic de corrélation partielle est inférieure à la puissance du signal de corrélation totale à la date de pic de corrélation totale.

8. Procédé selon l'une des revendications 1 à 6, comprenant une étape préalable de réglage de gain d'un amplificateur du récepteur consistant à établir une consigne de gain stationnaire.

9. Récepteur d'un signal de communication, **caractérisé en ce qu'**il comporte des moyens configurés pour mettre en œuvre le procédé de synchronisation selon l'une des revendications 1 à 7.

10. Produit programme d'ordinateur comprenant des instructions de code pour l'exécution des étapes du procédé selon l'une des revendications 1 à 7 lorsque ledit programme est exécuté sur un ordinateur.

## Patentansprüche

1. Verfahren zum Synchronisieren eines eingehenden Signals (SE) in einem Empfänger eines Kommunikationssystems, wobei das eingehenden Signal Datenrahmen trägt und jeder Rahmen (T) ein Trainingssymbol (SyA) umfasst, das aus N Wiederholungen einer Trainingssequenz (SeA) gebildet wird, wobei das Verfahren den folgenden Schritt umfasst:
- Bestimmen eines Gesamtkorrelationssignals (Tc) durch Korrelieren des eingehenden Signals mit einem Korrelationssymbol, das aus N Wiederholungen einer Korrelationssequenz gebildet wird, die der gesamten oder einem Teil der Trainingssequenz entspricht;
**dadurch gekennzeichnet, dass** es ferner die folgenden Schritte umfasst:
- Bestimmen eines Teilkorrelationssignals (Pc) durch Korrelation des eingehenden Signals mit der Korrelationssequenz;
- Identifizieren eines Spitzenwerts des Gesamtkorrelationssignals zu einem Zeitpunkt t_{pct}, Zeitpunkt des Gesamtkorrelationsspitzenwerts genannt;
- Festlegen mindestens eines Schwellenwerts (Sb, Sh) aus der Leistung des Spitzenwerts des Gesamtkorrelationssignals;
- Vergleichen der Leistung des Teilkorrelationssignals mit dem mindestens einen Schwellenwert;
- in Abhängigkeit vom Ergebnis dieses Vergleichs Validieren der Synchronisation und Bestimmen der Startzeit des ersten Symbols, das auf das Trainingssymbol im Rahmen folgt, anhand des Zeitpunkts des Gesamtkorrelationsspitzenwerts.

2. Verfahren nach Anspruch 1, wobei das Vergleichen der Leistung des Teilkorrelationssignals mit dem mindestens einen Schwellenwert das Vergleichen der Leistung des Teilkorrelationssignals zu den Zeitpunkten t_{pct}-k*t_{sc}, die dem Zeitpunkt des Gesamtkorrelationsspitzenwerts vorausgehen, mit dem mindestens einen Schwellenwert umfasst, wobei die Zeitpunkte t_{pct}-k*t_{sc} die Zeitpunkte des Teilkorrelationsspitzenwertes sind und t_{sc} die der Korrelationssequenz entsprechende Dauer ist und k eine ganze Zahl zwischen 0 und N-1 ist.

3. Verfahren nach Anspruch 2, umfassend das Festlegen eines hohen Schwellenwerts (Sh) und eines niedrigen Schwellenwerts (Sb), wobei die Synchronisation validiert wird, wenn die Leistung des Teilkorrelationssignals zu jedem der Zeitpunkte des Teilkorrelationsspitzenwertes zwischen dem hohen Schwellenwert und dem niedrigen Schwellenwert liegt.

4. Verfahren nach einem der Ansprüche 1 bis 3, wobei der niedrige Schwellenwert ein Bruchteil der Leistung des Spitzenwertes des Gesamtkorrelationssignals ist und der hohe Schwellenwert ein Vielfaches der Leistung des Spitzenwerts des Gesamtkorrelationssignals ist.

5. Verfahren nach Anspruch 4, wobei der niedrige Schwellenwert und der hohe Schwellenwert symmetrisch in Bezug auf die Leistung des Spitzenwerts des Gesamtkorrelationssignals sind.

6. Verfahren nach einem der Ansprüche 1 bis 5, ferner umfassend einen Schritt des Entvalidierens der Synchronisation, wenn das Teilkorrelationssignal zwischen den Zeitpunkten t_{pct}-N*t_{sc} und t_{pct} und außerhalb von Zeitfenstern, die jeweils einen der Zeitpunkte des Teilkorrelationsspitzenwertes umfassen, eine Leistung aufweist, die höher ist als die Leistung des Teilkorrelationssignals an einem der Zeitpunkte des Teilkorrelationsspitzenwertes.

7. Verfahren nach einem der Ansprüche 1 bis 6, ferner umfassend einen Schritt des Entvalidierens der Synchronisation, wenn die Leistung des Teilkorrelationssignals an einem der Zeitpunkte des Teilkorrelationsspitzenwertes niedriger ist als die Leistung des Gesamtkorrelationssignals zum Zeitpunkt des Gesamtkorrelationsspitzenwertes.

8. Verfahren nach einem der Ansprüche 1 bis 6, umfassend einen vorherigen Schritt des Einstellens der Verstärkung eines Verstärkers des Empfängers durch Setzen eines stationären Verstärkungssollwerts.

9. Empfänger für ein Kommunikationssignal, **dadurch gekennzeichnet, dass** er Mittel enthält, die dazu ausgelegt sind, um das Synchronisationsverfahren nach einem der Ansprüche 1 bis 7 durchzuführen.

10. Computerprogrammprodukt mit Codeanweisungen zum Ausführen der Schritte des Verfahrens nach einem der Ansprüche 1 bis 7, wenn das Programm auf einem Computer ausgeführt wird.

## Claims

1. Method for synchronising an input signal (SE) in a receiver of a communication system, the input signal carrying data frames and each frame (T) comprising a learning symbol (SyA) formed of N repetitions of a learning sequence (SeA), the method comprising the step of:
- determining a total correlation signal (Tc) by correlating the input signal with a correlation symbol formed of N repetitions of a correlation sequence corresponding to all or part of the learning sequence; the method being further **characterised in that** it
comprises the steps of:
- determining a partial correlation signal (Pc) by correlating the input signal with the correlation sequence;
- identifying a peak of the total correlation signal at an instant t_{pct}, called date of the total correlation peak;
- defining at least one threshold (Sb, Sh) from the power of the peak of the total correlation signal;
- comparing the power of the partial correlation signal to the at least one threshold;
- according to the result of the comparing, validating the synchronisation and determining the start time of the first symbol following the learning symbol in the frame from the date of the total correlation peak.

2. Method according to claim 1, wherein comparing of the power of the partial correlation signal to the at least one threshold comprises comparing the power of the partial correlation signal to the instants t_{pct}-k*t_{sc} preceding the total correlation peak date to the at least one threshold, the instants t_{pct}-k*t_{sc} being called partial correlation peak dates and t_{sc} being the duration corresponding to the correlation sequence and k a whole number between 0 and N-1.

3. Method according to claim 2, comprising the definition of a high threshold (Sh) and a low threshold (Sb) and wherein the synchronisation is validated when the power of the partial correlation signal at each of the partial correlation peak dates is between the high threshold and the low threshold.

4. Method according to one of claims 1 to 3, wherein the low threshold is a fraction of the power of the peak of the total correlation signal and the high threshold is a multiple of the power of the peak of the total correlation signal.

5. Method according to claim 4, wherein the low threshold and the high threshold are symmetrical with respect to the power of the peak of the total correlation signal.

6. Method according to one of claims 1 to 5, further comprising a step of invalidating the synchronisation when the partial correlation signal has, between the instants t_{pct}-N*t_{sc} and t_{pct} and outside of time windows each comprising one of the partial correlation peak dates, a power greater than the power of the partial correlation signal at one of the partial correlation peak dates.

7. Method according to one of claims 1 to 6, further comprising a step of invalidating the synchronisation when the power of the partial correlation signal at one of the partial correlation peak dates is less than the power of the total correlation signal at the total correlation peak date.

8. Method according to one of claims 1 to 6, comprising a prior step of adjusting the gain of an amplifier of the receiver that consists in establishing a stationary gain setpoint.

9. Receiver of a communication signal, **characterised in that** it comprises means configured to implement the synchronisation method according to one of claims 1 to 7.

10. Computer program product comprising code instructions for the execution of the steps of the method according to one of claims 1 to 7 when said program is run on a computer.
